# EUROPEAN PATENT SPECIFICATION

(11) **EP 4 317 743 B1**
(45) Date of publication and mention of the grant of the patent: **18.11.2026**
(21) Application number: 22780644.5
(22) Date of filing: 25.03.2022
(51) Int. Cl.: F16H 25/22, F16H 25/24

(54) **BALL SCREW**
KUGELUMLAUFSPINDEL
VIS À BILLES

(30) Priority: 31.03.2021 JP 2021062356
(43) Date of publication of application: 07.02.2024
(73) Proprietor: NSK Ltd., Tokyo 141-8560 (JP)
(72) Inventor: YABE, Takayuki, Fujisawa-shi, Kanagawa 251-8501 (JP)
(74) Representative: Grünecker Patent- und Rechtsanwälte PartG mbB
(86) International application number: PCT/JP2022/014700
(87) International publication number: WO 2022/210432

(56) References cited:
- JP-A- 2008 151 244
- JP-A- 2010 164 152
- JP-A- 2015 105 710
- US-A1- 2005 016 308

## Description

### TECHNICAL FIELD

The present invention relates to a ball screw.

### BACKGROUND ART

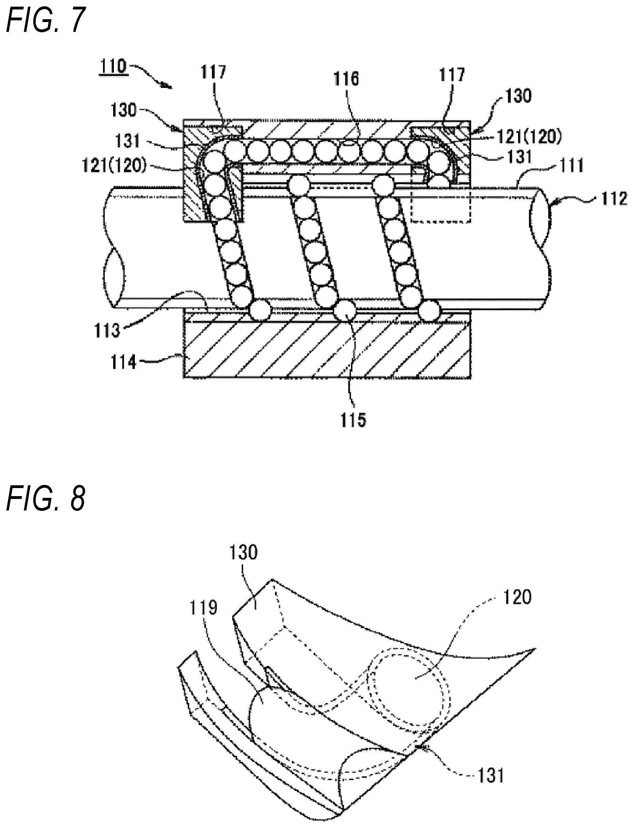

As a ball screw device of this type of the related art, for example, a ball screw device shown in FIG. 7 is known.

In a ball screw device 110, a nut 114 having a spiral screw groove 113 corresponding to a spiral screw groove 11 on an inner peripheral surface is screwed to a screw shaft 112 having the spiral screw groove 111 on an outer peripheral surface and extending in an axial direction. The screw groove 111 of the screw shaft 112 and the screw groove 113 of the nut 114 face each other to form a load raceway therebetween, and a large number of balls 115 as a rolling body are rollably loaded in the load raceway.

A ball return passage 116 penetrating in the axial direction is formed in a wall portion of the nut 114, and notches 117 through which end portions of the ball return passage 116 open are formed in both end portions of the nut 114 (see FIG. 7). A circulation piece (circulation part) 130 for communicating the ball return passage 116 with the load raceway between the screw grooves 111, 113 is fixedly fitted into each of the notches 117.

As shown in FIG. 8, the circulation piece 130 is formed with a curved ball circulation groove 120 that communicates between the ball return passage 116 and the load raceway between the two screw grooves 111, 113, and a tongue portion 119 that scoops up the balls 115 which roll on the load raceway between the two screw grooves 111, 113 is provided at a front end of the ball circulation groove 120. A circulation passage 121 for the balls 115 is formed by each of the ball circulation grooves 120 and a ball running surface wider than a diameter of the ball provided on an inner surface of the corresponding notch 117 in a radial direction, and an endless circulation passage for the balls 115 is formed by the ball circulation passages 121, the load raceway between the two screw grooves 111, 113, and the ball return passage 116. Further, as the screw shaft 112 (or the nut 114) rotates, the nut 114 (or the screw shaft 112) moves in the axial direction via the rolling of the balls 115.

In the ball screw described in Patent Literature 1, a portion of the ball circulation groove 120 of the circulation piece 130 is formed by a ball circulation groove forming member (high-strength material) 131 made of metal having a higher strength than a strength of a synthetic resin molded body. The ball circulation groove forming member 131 is formed by, for example, press molding of a sheet metal or the like, and is integrally molded with the circulation piece 130. In addition, in Patent Literature 1, the inner surface of the notch 117 in the radial direction is formed to be deeper, and a plate for preventing separation such as a super hard alloy plate is mounted, and a plate surface is used as the ball running surface of the notch 117. Accordingly, when the circulating balls collide with an inner surface of a direction changing portion, the balls are prevented from being peeled off to have a bad influence on operability due to a circulation failure of the balls. Patent Literature 2 describes another ball screw comprising the features of the preamble of claim 1, in particular a nut provided with a notch portion in which an elongated hole is formed, and a circulation part including a first circulation component and a second circulation component accommodated in the notch portion.

### CITATION LIST

### PATENT LITERATURE

Patent Literature 1: JP 2004 340220 A
Patent Literature 2: JP 2010 164152 A

### SUMMARY OF INVENTION

### TECHNICAL PROBLEM

However, since a circulation component described in Patent Literature 1 is manufactured by insert molding, a structure in which two components are physically connected to each other is necessary, and the design becomes complicated. Further, there is a problem that a shape of the circulation component described in Patent Literature 1 cannot be applied to a circulation component having a small groove width of a small lead.

The present invention has been made in view of the problems described above, and an object of the present invention is to provide a ball screw that can ensure a more stable operation by improving a strength of a ball circulation part and can be applied to a small lead or a large lead of multi-thread specification having a small ball pitch.

### SOLUTION TO PROBLEM

The above object of the present invention is achieved by a ball screw according to claim 1, preferably comprising the additional features of claim 2.

### ADVANTAGEOUS EFFECTS OF INVENTION

In the ball screw according to the present invention, there is provided the ball screw that can ensure a more stable operation by improving a strength of a ball circulation part and can be applied to a small lead or a large lead of multi-thread specification having a small ball pitch.

### BRIEF DESCRIPTION OF DRAWINGS

FIG. 1A is a side view showing a nut of a ball screw according to an embodiment of the present invention, and FIG. 1B is a partial side view showing a notch portion of the nut from which a circulation component is removed.

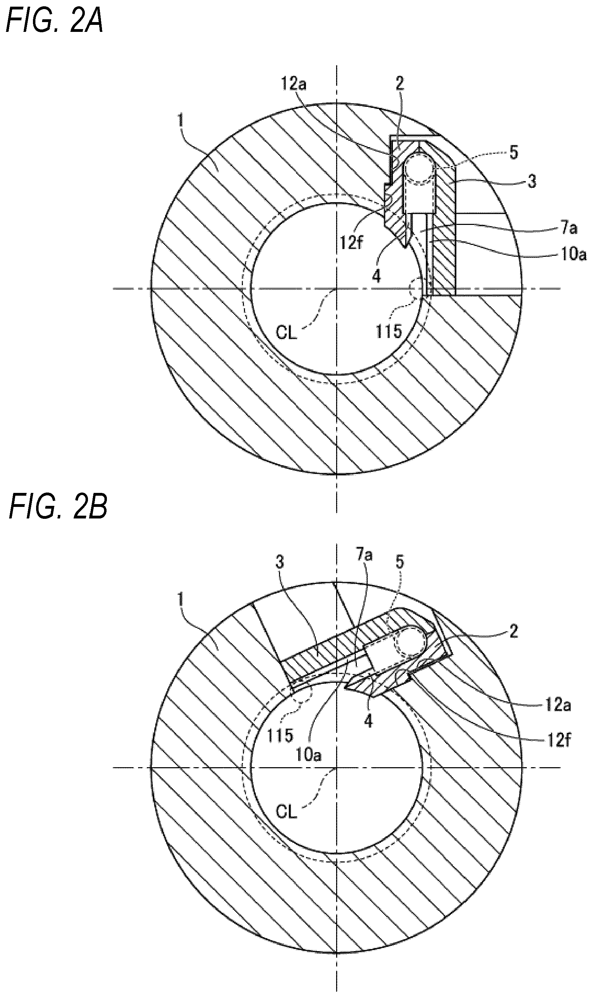

FIG. 2A is a cross-sectional view taken along a line II-II of FIG. 1A, and FIG. 2B is a cross-sectional view taken along a line II'-II' of FIG. 1A.
FIG. 3A is a front view of a first circulation component, FIG. 3B is a side view thereof, and FIG. 3C is a back view thereof.
FIG. 4A is a front view of a second circulation component, FIG. 4B is a side view thereof, and FIG. 4C is a back view thereof.
FIG. 5A is a front view of a pipe, and FIG. 5B is a side view thereof.
FIG. 6A is a front view of a pipe according to a modification, and FIG. 6B is a side view thereof.
FIG. 7 is a sectional view of main parts of a ball screw of the related art.
FIG. 8 is an overall perspective view showing an example of a circulation piece used in the ball screw of FIG. 7.

### DESCRIPTION OF EMBODIMENTS

Hereinafter, a ball screw according to an embodiment of the present invention will be described in detail with reference to the drawings. The ball screw according to the present invention is characterized by a nut and a circulation part, and a screw shaft 112 and balls 115 of the related art shown in FIG. 7 are referred to for a screw shaft and balls that are constituent elements.

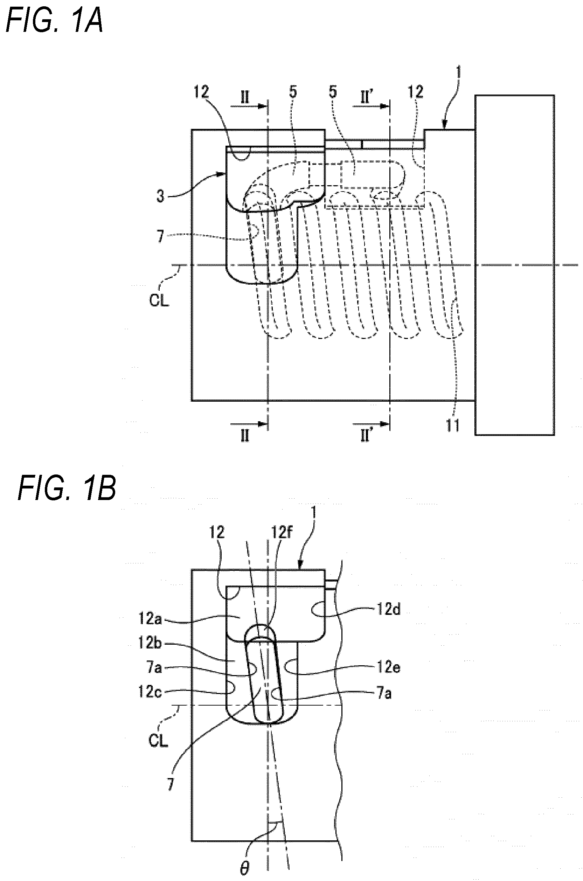

As shown in FIG. 1A, a nut 1 made of metal is formed in a cylindrical shape, and one spiral screw groove 11 is formed on an inner peripheral surface thereof.

In addition, an outer peripheral surface of the nut 1 is formed with two notch portions 12 cut out from an outer side in a radial direction. Further, an elongated hole 7, which penetrates in the radial direction and opens corresponding to the screw groove 11 formed in the inner peripheral surface, is formed in each of the notch portions 12.

First and second circulation components 2, 3 and a pipe 5, which serve as a circulation part, are attached to the notch portion 12, which forms a ball circulation path for circulating the balls 115 rolling between the screw grooves 111, 11 of the screw shaft 112 and the nut 1.

As shown in FIG. 1B, in the notch portion 12, two bottom wall surfaces 12a, 12b parallel to a center axis of the nut 1 and parallel to each other are formed in a stepped shape, and inner wall surfaces 12c, 12d, and 12e are formed along the radial direction on both axial sides of the two bottom wall surfaces 12a, 12b. The bottom wall surface 12a is formed longer on one side in the axial direction than the bottom wall surface 12b. A counterbore portion 12f is formed in a part of the bottom wall surface 12a adjacent to the elongated hole 7 in a longitudinal direction.

The elongated hole 7 is formed along a lead angle θ of the screw groove 11 in the longitudinal direction and has the same width as the screw groove 11. The elongated hole 7 is used such that a part of both longitudinal side surfaces 7a parallel to each other guides the balls 115 when the circulation part is attached to the inside of the notch portion 12 to form a scoop-up part for scooping up the balls 115 in the elongated hole 7.

The circulation part constitutes, in the ball circulation path, a direction changing part that changes a movement direction of the scooped-up balls 115 so as to be directed in the axial direction from a direction of the scoop-up part along the lead angle θ to the other circulation part, in addition to the scoop-up part described above.

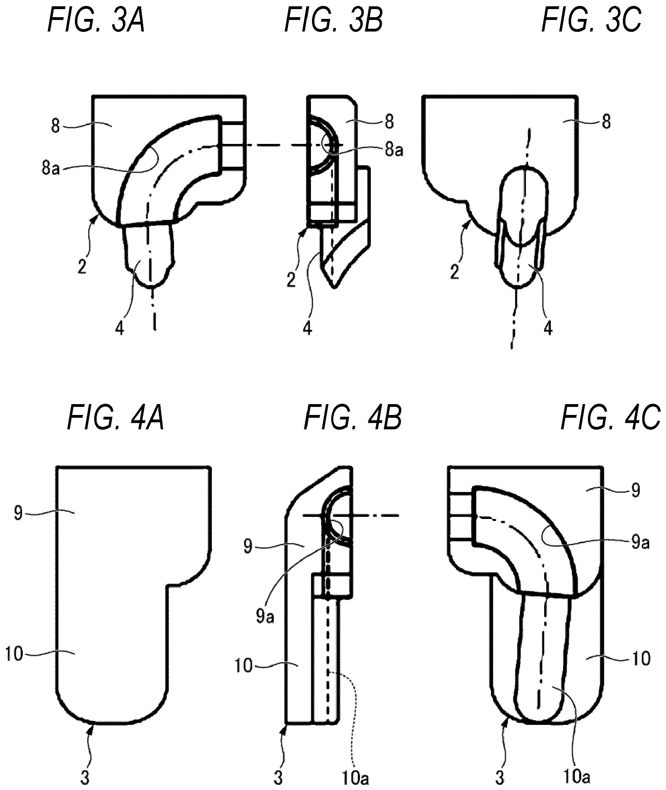

Specifically, as shown in FIGS. 3A to 3C, the first circulation component 2 includes a main body portion 8 forming a semi-columnar pipe accommodating groove 8a for accommodating one portion (half portion) of the pipe 5, and a tongue portion 4 accommodated in the elongated hole 7.

As shown in FIGS. 4A to 4C, the second circulation component 3 includes a main body portion 9 in which a semi-columnar pipe accommodating groove 9a for accommodating a remaining portion (half portion) of the pipe 5 is formed on a back surface of the main body portion 9 that abuts against a front surface of the first circulation component 2, and an extending portion 10 that is formed so as to be continuous with a front surface of the main body portion 9 and has a wall portion 10a constituting the scoop-up part on a back surface thereof. In the main body portion 9, an abutting surface that abuts against the main body portion 8 of the first circulation component 2 has substantially the same size as the front surface of the main body portion, and the back surface of the extending portion 10 other than the wall portion 10a abuts against the bottom wall surface 12b of the notch portion 12.

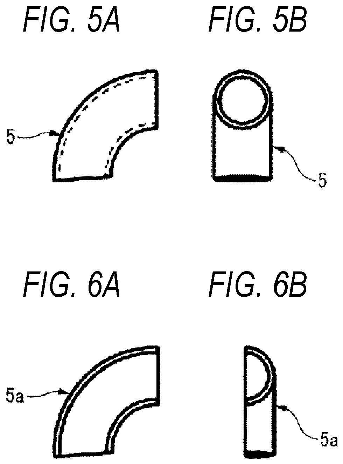

As shown in FIGS. 5A and 5B, the pipe 5 is a curved cylindrical member forming a direction changing path of the ball circulation path, and is disposed in both pipe accommodating grooves 8a, 9a of the abutting surface where the first circulation component 2 and the second circulation component 3 abut. The pipe 5 is made of, for example, metal, which is a material having higher strength than materials (resin in the present embodiment) of the first and second circulation components 2, 3.

Although the pipe 5 is formed in an arc shape having a single curvature, at least one end portion of the pipe 5 may be provided with a straight portion, and the pipe 5 may be exposed on both end surfaces of the circulation part.

The pipe 5 may be formed by combining a pair of pipe pieces 5a divided into two as shown in FIGS. 6A and 6B. Such a pipe piece 5a may be manufactured by press working or the like.

The first circulation component 2 is disposed in the notch portion 12 so as to abut against the bottom wall surface 12a of the notch portion 12, and the tongue portion 4 is disposed in the elongated hole 7. In addition, the second circulation component 3 is disposed in the notch portion 12 so as to cover the first circulation component 2. At this time, the wall portion 10a of the second circulation component 3 is accommodated in the elongated hole 7 and faces the tongue portion 4.

Accordingly, the scoop-up part of the ball circulation path is constituted by the tongue portion 4 of the first circulation component 2, the wall portion 10a of the second circulation component 3, and the both longitudinal side surfaces 7a of the elongated hole 7.

The first circulation component 2, the pipe 5, and the second circulation component 3 may be assembled into the notch portion 12 in this order, or may be assembled into the notch portion 12 in an assembled state.

According to the ball screw of the present embodiment, since the pipe 5 is used in the direction changing part, it is possible to ensure a more stable operation by improving the strength of the ball circulation part, and since the both longitudinal side surfaces 7a of the elongated hole 7 formed in the nut 1 are used in the scoop-up part, it is also possible to apply the ball screw to a small lead or a large lead of multi-thread specification having a small ball pitch.

The present invention is not limited to the embodiment and the modifications described above, and modifications, improvements, and the like can be appropriately made.

In the present embodiment, the ball circulation path is configured by communicating parts of the two notch portions 12 and directly connecting the two circulation parts attached to the respective notch portions 12, but a ball return passage extending in the axial direction may be formed in the nut 1 between the two circulation parts in accordance with an axial length of the nut 1 as in FIG. 7, for example.

The ball screw according to the present invention is used, for example, in an XY stage used for positioning of a device that performs high-precision processing and measurement, manufacturing of a semiconductor, or the like. In addition, the ball screw is used in, for example, a machine tool (a machining center, a lathe, a grinder, or the like), a measuring machine (a three-dimensional measuring instrument), a semiconductor manufacturing device (a table of an exposure device, an inspection probe, or the like), or the like.

The present application is based on a Japanese patent application (Japanese Patent Application No. 2021-062356) filed on March 31, 2021.

### REFERENCE SIGN LIST

1 nut
2 first circulation component
3 second circulation component
4 tongue portion
5 pipe
7 elongated hole
8, 9 main body portion
10a wall portion
11 screw groove
12 notch portion
111 screw groove
112 screw shaft
115 ball

## Claims

1. A ball screw comprising:
a screw shaft (112) formed with a spiral screw groove (111) on an outer peripheral surface thereof;
a nut (1) formed with a spiral screw groove (11) on an inner peripheral surface thereof and provided with a notch portion (12) on an outer peripheral surface thereof;
balls (115) configured to roll between the screw groove (111) of the screw shaft (112) and the screw groove (11) of the nut (1); and
a circulation part forming a ball circulation path for circulating the balls (115) rolling between both screw grooves (11, 111) of the screw shaft (112) and the nut (1) and attached to the notch portion (12), wherein
the nut (1) is formed with, in the notch portion (12), an elongated hole (7) that penetrates in a radial direction, and whose longitudinal direction is formed along a lead angle (θ) and parts of both longitudinal side surfaces (7a) parallel to each other guide the balls (115), and
wherein the circulation part includes
a first circulation component (2) that is disposed in the notch portion (12) so as to abut against a bottom wall surface (12a) of the notch portion (12) and has a tongue portion (4) accommodated in the elongated hole (7), and
a second circulation component (3) that is disposed in the notch portion (12) so as to cover the first circulation component (2) and accommodated in the elongated hole (7), and has a wall portion (10a) facing the tongue portion (4), **characterized in that** the circulation part includes
a pipe (5) that is disposed in an abutting surface where the first circulation component (2) and the second circulation component (3) abut against each other, constitutes a part of the ball circulation path, and has a higher strength than materials of the first and second circulation components (2, 3), and that
in the notch portion (12), two bottom wall surfaces (12a, 12b) parallel to a center axis of the nut (1) and parallel to each other are formed in a stepped shape, wherein one of the two bottom wall surfaces (12a, 12b) is formed longer on one side in the axial direction than the other one of the two bottom wall surfaces (12a, 12b);
the first circulation component (2) is disposed in the notch portion (12) so as to abut against the bottom wall surface (12a) of the notch portion (12), which is the one of the two bottom wall surfaces (12a, 12b) that is formed longer on one side in the axial direction than the other one of the two bottom wall surfaces (12a, 12b), and the tongue portion (4) is disposed in the elongated hole (7);
the second circulation component (3) includes: a main body portion (9); and an extending portion (10) that is formed so as to be continuous with a front surface of the main body portion (9) and has the wall portion (10a) constituting a scoop-up part of the ball circulation path on a back surface thereof; and
the back surface of the extending portion (10) other than the wall portion (10a) abuts against the bottom wall surface (12b) of the notch portion (12), which is the other one of the two bottom wall surfaces (12a, 12b) that is shorter in the axial direction.

2. The ball screw according to claim 1,
wherein the scoop-up part of the ball circulation path is constituted by the tongue portion (4) of the first circulation component (2), the wall portion (10a) of the second circulation component (3), and the both longitudinal side surfaces (7a) of the elongated hole (7), and
wherein a direction changing part of the ball circulation path is constituted by the pipe (5).

## Patentansprüche

1. Kugelumlaufspindel, umfassend:
eine Spindelwelle (112), die mit einer schraubenförmigen Gewinderille (111) auf einer Außenumfangsfläche davon ausgebildet ist;
eine Mutter (1), die mit einer schraubenförmigen Gewinderille (11) auf einer Innenumfangsfläche davon ausgebildet und mit einem Aussparungsabschnitt (12) auf einer Außenumfangsfläche davon versehen ist;
Kugeln (115), die dazu eingerichtet sind, zwischen der Gewinderille (111) der Spindelwelle (112) und der Gewinderille (11) der Mutter (1) abzurollen; und
ein Umlaufteil, das eine Kugelumlaufbahn zum Umlaufenlassen der Kugeln (115), die zwischen den beiden Gewinderillen (11, 111) der Spindelwelle (112) und der Mutter (1) abrollen, bildet und an dem Aussparungsabschnitt (12) angebracht ist, wobei
die Mutter (1) in dem Aussparungsabschnitt (12) mit einem Langloch (7) ausgebildet ist, das in einer Radialrichtung durchdringt und dessen Längsrichtung entlang eines Steigungswinkels (θ) ausgebildet ist, und Abschnitte der beiden zueinander parallelen Längsseitenflächen (7a) die Kugeln (115) führen, und
wobei das Umlaufteil umfasst:
ein erstes Umlaufbauteil (2), das in dem Aussparungsabschnitt (12) so angeordnet ist, dass es an einer Bodenwandfläche (12a) des Aussparungsabschnitts (12) anliegt, und einen in dem Langloch (7) aufgenommenen Zungenabschnitt (4) aufweist, und
ein zweites Umlaufbauteil (3), das in dem Aussparungsabschnitt (12) so angeordnet ist, dass es das erste Umlaufbauteil (2) bedeckt, und in dem Langloch (7) aufgenommen ist und einen dem Zungenabschnitt (4) zugewandten Wandabschnitt (10a) aufweist,
**dadurch gekennzeichnet, dass** das Umlaufteil umfasst:
ein Rohr (5), das in einer Anlagefläche angeordnet ist, an der das erste Umlaufbauteil (2) und das zweite Umlaufbauteil (3) aneinander anliegen, einen Teil der Kugelumlaufbahn bildet und eine höhere Festigkeit als die Materialien des ersten und des zweiten Umlaufbauteils (2, 3) aufweist, und dass
in dem Aussparungsabschnitt (12) zwei Bodenwandflächen (12a, 12b), die parallel zu einer Mittelachse der Mutter (1) und parallel zueinander sind, in einer Stufenform ausgebildet sind, wobei eine der beiden Bodenwandflächen (12a, 12b) auf einer Seite in der Axialrichtung länger ausgebildet ist als die andere der beiden Bodenwandflächen (12a, 12b);
das erste Umlaufbauteil (2) in dem Aussparungsabschnitt (12) so angeordnet ist, dass es an der Bodenwandfläche (12a) des Aussparungsabschnitts (12) anliegt, die diejenige der beiden Bodenwandflächen (12a, 12b) ist, die auf einer Seite in der Axialrichtung länger ausgebildet ist als die andere der beiden Bodenwandflächen (12a, 12b), und der Zungenabschnitt (4) in dem Langloch (7) angeordnet ist;
das zweite Umlaufbauteil (3) umfasst: einen Hauptkörperabschnitt (9); und einen Verlängerungsabschnitt (10), der so ausgebildet ist, dass er an eine Vorderfläche des Hauptkörperabschnitts (9) anschließt, und auf seiner Rückfläche den Wandabschnitt (10a) aufweist, der einen Aufnahmeabschnitt der Kugelumlaufbahn bildet; und
die Rückfläche des Verlängerungsabschnitts (10) außerhalb des Wandabschnitts (10a) an der Bodenwandfläche (12b) des Aussparungsabschnitts (12) anliegt, die die andere der beiden Bodenwandflächen (12a, 12b) ist, die in der Axialrichtung kürzer ist.

2. Kugelumlaufspindel nach Anspruch 1,
wobei der Aufnahmeabschnitt der Kugelumlaufbahn durch den Zungenabschnitt (4) des ersten Umlaufbauteils (2), den Wandabschnitt (10a) des zweiten Umlaufbauteils (3) und die beiden Längsseitenflächen (7a) des Langlochs (7) gebildet ist, und
wobei ein Richtungsänderungsabschnitt der Kugelumlaufbahn durch das Rohr (5) gebildet ist.

## Revendications

1. Vis à billes comprenant :
un arbre de vis (112) pourvu d'une rainure de vis hélicoïdale (111) sur une surface périphérique extérieure de celui-ci ;
un écrou (1) pourvu d'une rainure de vis hélicoïdale (11) sur une surface périphérique intérieure de celui-ci et muni d'une partie en encoche (12) sur une surface périphérique extérieure de celui-ci ;
des billes (115) configurées pour rouler entre la rainure de vis (111) de l'arbre de vis (112) et la rainure de vis (11) de l'écrou (1) ; et
une partie de circulation formant un trajet de circulation des billes destiné à faire circuler les billes (115) roulant entre les deux rainures de vis (11, 111) de l'arbre de vis (112) et de l'écrou (1), et fixée à la partie en encoche (12), dans laquelle
l'écrou (1) est pourvu, dans la partie en encoche (12), d'un trou oblong (7) qui traverse dans une direction radiale et dont la direction longitudinale est formée le long d'un angle d'hélice (θ), et des parties des deux surfaces latérales longitudinales (7a) parallèles l'une à l'autre guident les billes (115), et
dans laquelle la partie de circulation comprend :
un premier composant de circulation (2) qui est disposé dans la partie en encoche (12) de manière à venir en butée contre une surface de paroi de fond (12a) de la partie en encoche (12) et comporte une partie en languette (4) logée dans le trou oblong (7), et
un second composant de circulation (3) qui est disposé dans la partie en encoche (12) de manière à recouvrir le premier composant de circulation (2), est logé dans le trou oblong (7) et comporte une partie de paroi (10a) faisant face à la partie en languette (4),
**caractérisée en ce que** la partie de circulation comprend :
un tube (5) qui est disposé dans une surface d'aboutement au niveau de laquelle le premier composant de circulation (2) et le second composant de circulation (3) viennent en butée l'un contre l'autre, constitue une partie du trajet de circulation des billes et présente une résistance supérieure à celle des matériaux des premier et second composants de circulation (2, 3), et **en ce que**
dans la partie en encoche (12), deux surfaces de paroi de fond (12a, 12b), parallèles à un axe central de l'écrou (1) et parallèles l'une à l'autre, sont formées selon une forme étagée, l'une des deux surfaces de paroi de fond (12a, 12b) étant formée plus longue d'un côté dans la direction axiale que l'autre des deux surfaces de paroi de fond (12a, 12b) ;
le premier composant de circulation (2) est disposé dans la partie en encoche (12) de manière à venir en butée contre la surface de paroi de fond (12a) de la partie en encoche (12), qui est celle des deux surfaces de paroi de fond (12a, 12b) qui est formée plus longue d'un côté dans la direction axiale que l'autre des deux surfaces de paroi de fond (12a, 12b), et la partie en languette (4) est disposée dans le trou oblong (7) ;
le second composant de circulation (3) comprend : une partie de corps principal (9) ; et une partie d'extension (10) qui est formée de manière à être continue avec une surface avant de la partie de corps principal (9) et comporte, sur sa surface arrière, la partie de paroi (10a) constituant une partie de prélèvement du trajet de circulation des billes ; et
la surface arrière de la partie d'extension (10), à l'exclusion de la partie de paroi (10a), vient en butée contre la surface de paroi de fond (12b) de la partie en encoche (12), qui est l'autre des deux surfaces de paroi de fond (12a, 12b) qui est plus courte dans la direction axiale.

2. Vis à billes selon la revendication 1,
dans laquelle la partie de prélèvement du trajet de circulation des billes est constituée par la partie en languette (4) du premier composant de circulation (2), la partie de paroi (10a) du second composant de circulation (3) et les deux surfaces latérales longitudinales (7a) du trou oblong (7), et
dans laquelle une partie de changement de direction du trajet de circulation des billes est constituée par le tube (5).
